# EUROPEAN PATENT APPLICATION

(11) **EP 4 686 162 A1**
(43) Date of publication of application: **28.01.2026**
(21) Application number: 24773917.0
(22) Date of filing: 06.03.2024
(51) Int. Cl.: H04L 41/14

(54) **COMMUNICATION METHOD, COMPUTER READABLE STORAGE MEDIUM, AND COMMUNICATION APPARATUS**

(30) Priority: 23.03.2023 CN 202310294826
(71) Applicant: Spreadtrum Communications (Shanghai) Co., Ltd., Shanghai 201203 (CN)
(72) Inventor: CHEN, Xiaoyu, Shanghai 201203 (CN); HAN, Lifeng, Shanghai 201203 (CN)
(74) Representative: Casalonga
(86) International application number: PCT/CN2024/080300
(87) International publication number: WO 2024/193349

(57) **Abstract**

A communication method, computer-readable storage medium, and communication apparatus. The method comprises: receiving model identifier information, the model identifier information for indicating at least one model identifier; and determining a first model identifier of the at least one model identifier as a model identifier of a first model, the first model being deployed on a terminal device. The solution provided by the application facilitates model management of models deployed on terminal devices.

## Description

The present application claims priority to CN Patent Application No. 202310294826.2, entitled "COMMUNICATION METHOD, COMPUTER-READABLE STORAGE MEDIUM, AND COMMUNICATION APPARATUS", filed with the China National Intellectual Property Administration on March 23, 2023, the entirety of which is incorporated herein by reference.

### FIELD OF TECHNOLOGY

The present application relates to communication technology, and particularly to a communication method, computer-readable storage medium, and communication apparatus.

### BACKGROUND

The intelligence of wireless networks is an important evolution trend, and the 3rd Generation Partnership Project (3GPP) has discussed the introduction of Artificial Intelligence (AI) models or Machine Learning (ML) models in Fifth Generation (5G) networks to support communications between terminal devices and network devices. It proposes an urgent problem for network devices as of the model management for various AI models or ML models deployed on terminal devices.

### SUMMARY

A technical objective of the present application is related to providing a communication method, a computer-readable storage medium, and a communication apparatus, facilitating model management by network devices on models deployed on the terminal devices.

In a first aspect, an embodiment of the present application provides a communication method. The method comprises: receiving model identifier information, the model identifier information for indicating at least one model identifier; and determining a first model identifier of the at least one model identifier as a model identifier of a first model, the first model being deployed on a terminal device.

Optionally, the method further comprises: sending a model identifier request, the model identifier request for requesting allocation of a model identifier for the first model.

Optionally, the sending the model identifier request comprises: sending the model identifier request before deployment of the first model is completed.

Optionally, the method further comprises: sending model identifier allocation related information, the model identifier allocation related information for assisting in allocation of a model identifier for the first model.

Optionally, the model identifier allocation related information comprises at least one of: a released model identifier, information on training data of a model, model structure information, model function information, model input information, model output information, and model priority information.

Optionally, the first model identifier is a model identifier with the smallest identifier value of the at least one model identifier.

Optionally, the method further comprises: sending a model identifier selection result, the model identifier selection result for indicating the selected first model identifier.

Optionally, the sending the model identifier selection result comprises: sending the model identifier selection result before deployment of the first model is completed.

Optionally, the method further comprises: receiving a model identifier selection response, the model identifier selection response for indicating approval status of the model identifier selection result.

Optionally, when the model identifier selection response indicates disapproval of the model identifier selection result, the model identifier selection response further indicates a second model identifier, or the model identifier selection response further indicates to generate a model identifier for the first model, or the model identifier selection response further indicates to reselect a model identifier for the first model and/or indicates a model identifier reselection list.

Optionally, when the model identifier selection response indicates approval of the model identifier selection result, associating the first model identifier with the first model.

Optionally, the method further comprises: sending model notification information, the model notification information for describing the first model.

Optionally, the model notification information comprises at least one of the following information of the first model: the model identifier, model function information, model size information, model complexity information, model application scenario information, model structure information, model configuration information, model input information, model output information, and model priority information.

In a second aspect, an embodiment of the present application provides a communication method. The method comprises: sending model identifier information, the model identifier information for indicating at least one model identifier, the at least one model identifier for determining a model identifier allocated for a first model, the first model being deployed on a terminal device.

Optionally, the method further comprises: receiving a model identifier request, the model identifier request for requesting allocation of a model identifier for the first model.

Optionally, the method further comprises: receiving model identifier allocation related information, the model identifier allocation related information for assisting in allocation of a model identifier for the first model.

Optionally, the model identifier allocation related information comprises at least one of: a released model identifier, information on training data of a model, model structure information, model function information, model input information, model output information, and model priority information.

Optionally, the method further comprises: receiving a model identifier selection result, the model identifier selection result for indicating a first model identifier selected by the terminal device.

Optionally, the method further comprises: sending a model identifier selection response, the model identifier selection response for indicating approval status of the model identifier selection result.

Optionally, when the model identifier selection response indicates disapproval of the model identifier selection result, the model identifier selection response further indicates a second model identifier; or the model identifier selection response further indicates to generate a model identifier for the first model; or the model identifier selection response further indicates to reselect a model identifier for the first model and/or indicates a model identifier reselection list.

Optionally, the method further comprises: receiving first model notification information, the first model notification information for describing the first model.

Optionally, the first model notification information comprises at least one of the following information of the first model: the model identifier, model function information, model size information, model complexity information, model application scenario information, model structure information, model configuration information, model input information, model output information, and model priority information.

Optionally, the method further comprises: sending second model notification information, the second model notification information for describing the first model.

Optionally, the method further comprises: sending a model identifier registration request, the model identifier registration request for requesting registration of the model identifier of the first model.

Optionally, the method further comprises: receiving a model identifier registration response, the model identifier registration response for indicating the registration status of the model identifier allocated for the first model.

In a third aspect, an embodiment of the present application provides a communication method. The method comprises: generating a first model identifier; and sending a model identifier request, the model identifier request for requesting allocation of the first model identifier for a first model, the first model being deployed on a terminal device.

Optionally, the method further comprises: receiving a model identifier response, the model identifier response for indicating approval status of the allocation of the first model identifier for the first model.

Optionally, when the model identifier response indicates disapproval of the allocation of the first model identifier for the first model, the model identifier response further indicates to re-generate a model identifier, or the model identifier response further indicates a second model identifier; or the model identifier response further indicates to select a model identifier for the first model and/or indicates a model identifier selection list.

Optionally, the model identifier request comprises at least one of: a released model identifier, information on training data of a model, model structure information, model function information, model input information, model output information, and model priority information.

In a fourth aspect, an embodiment of the present application provides a communication method. The method comprises: receiving a model identifier request, the model identifier request for requesting allocation of a generated first model identifier for a first model, the first model being deployed on a terminal device.

Optionally, the method further comprises: sending a model identifier response, the model identifier response for indicating approval status of the allocation of the first model identifier for the first model.

Optionally, when the model identifier response indicates disapproval of the allocation of the first model identifier for the first model, the model identifier response further indicates to re-generate a model identifier, or the model identifier response further indicates a second model identifier, or the model identifier response further indicates to select a model identifier for the first model and/or indicates a model identifier selection list.

Optionally, the model identifier request comprises at least one of: a released model identifier, information on training data of a model, model structure information, model function information, model input information, model output information, and model priority information.

In a fifth aspect, an embodiment of the present application further provides a communication apparatus. The apparatus comprises: a communication module for receiving model identifier information, the model identifier information for indicating at least one model identifier; and a processing module for determining a first model identifier of the at least one model identifier as a model identifier of a first model, the first model being deployed on a terminal device.

In a sixth aspect, an embodiment of the present application further provides a communication apparatus. The apparatus comprises: a communication module for sending model identifier information, the model identifier information for indicating at least one model identifier, the at least one model identifier for determining a model identifier allocated for a first model, the first model being deployed on a terminal device.

In a seventh aspect, an embodiment of the present application further provides a communication apparatus. The apparatus comprises: a processing module for generating a first model identifier; and a communication module for sending a model identifier request, the model identifier request for requesting allocation of the first model identifier for a first model, the first model being deployed on a terminal device.

In an eighth aspect, an embodiment of the present application further provides a communication apparatus. The apparatus comprises: a communication module for receiving a model identifier request, the model identifier request for requesting allocation of a generated first model identifier for a first model, the first model being deployed on a terminal device.

In a ninth aspect, an embodiment of the present application further provides a computer-readable storage medium having computer programs stored thereon. The computer programs, when executed by a processor, perform the steps of the communication method provided in the first aspect, the second aspect, the third aspect, or the fourth aspect.

In a tenth aspect, an embodiment of the present application further provides a communication apparatus, including a memory and a processor. The memory has computer programs executable on the processor stored thereon and the processor, when executing the computer programs, performs the steps of the communication method provided in the first aspect or the third aspect.

In an eleventh aspect, an embodiment of the present application further provides a communication apparatus, including a memory and a processor. The memory has computer programs executable on the processor stored thereon and the processor, when executing the computer programs, performs the steps of the communication method provided in the second aspect or the fourth aspect.

In a twelfth aspect, an embodiment of the present application provides a chip (or a communication apparatus). The chip has computer programs stored thereon and the computer programs, when executed by the chip, cause the method provided in any of the above aspects to be performed.

In a thirteenth aspect, an embodiment of the present application provides a chip module. The chip module has computer programs stored thereon and the computer programs, when executed by the chip module, cause the method provided in any of the above aspects to be performed.

In a fourteenth aspect, an embodiment of the present application provides a computer program product. The computer program product comprises computer programs and the computer programs, when executed on a computer, cause the computer to perform the method provided in any of the above aspects.

In a fifteenth aspect, an embodiment of the present application provides a communication system. The communication system comprises means for performing the communication method provided in the first aspect or the third aspect and means for performing the communication method provided in the second aspect or the fourth aspect.

Compared with the prior art, the technical solutions of the embodiments of the present application provide the following positive effects.

In a solution of the embodiments of the present application, a network device sends model identifier information to a terminal device, where the model identifier information indicates at least one model identifier, and the terminal device determines a first model identifier of the at least one model identifier as a model identifier of a first model.In the above solution, the network device allocates the model identifier for the first model deployed on the terminal device, ensuring consistence of knowledge of the model identifier of the first model between the network device and the terminal device, thereby facilitating subsequent model management functions and ensuring model performance.

Further, in a solution of the embodiments of the present application, the terminal device sends the model identifier selection result before the deployment of the first model is completed, promoting the terminal device to preempt model identifier resources at the network device as soon as possible, preventing the model identifier selected by the terminal device from being occupied by other terminals.

Furthermore, in a solution of the embodiments of the present application, the terminal device may send model identifier allocation related information to the network device to assist in allocation of the model identifier. A more reasonable model identifier allocation for the first model may be achieved.

### BRIEF DESCRIPTION OF THE DRAWINGS

FIG. 1 is a schematic architecture diagram of a communication system in an embodiment of the present application;
FIG. 2 is a schematic diagram illustrating signaling interaction according to a first communication method in an embodiment of the present application;
FIG. 3 is a schematic diagram illustrating signaling interaction according to a second communication method in an embodiment of the present application;
FIG. 4 is a schematic diagram illustrating signaling interaction according to a third communication method in an embodiment of the present application;
FIG. 5 is a schematic diagram illustrating signaling interaction according to a fourth communication method in an embodiment of the present application;
FIG. 6 is a schematic diagram illustrating signaling interaction according to a fifth communication method in an embodiment of the present application;
FIG. 7 is a schematic diagram illustrating signaling interaction according to a sixth communication method in an embodiment of the present application;
FIG. 8 is a schematic diagram illustrating signaling interaction according to a seventh communication method in an embodiment of the present application;
FIG. 9 is a schematic diagram illustrating signaling interaction according to an eighth communication method in an embodiment of the present application;
FIG. 10 is a schematic diagram illustrating signaling interaction according to a communication method in an embodiment of the present application;
FIG. 11 is a schematic diagram illustrating signaling interaction according to another communication method in an embodiment of the present application;
FIG. 12 is a schematic structure diagram of a first communication apparatus in an embodiment of the present application;
FIG. 13 is a schematic structure diagram of a second communication apparatus in an embodiment of the present application;
FIG. 14 is a schematic structure diagram of a third communication apparatus in an embodiment of the present application;
FIG. 15 is a schematic structure diagram of a fourth communication apparatus in an embodiment of the present application;
FIG. 16 is a schematic hardware architecture diagram of a communication apparatus in an embodiment of the present application.

### DETAILED DESCRIPTION

It should be understood that the term "and/or" recited in the embodiments of the present application is merely a description of relations of related objects, indicating three types of relations. For example, A and/or B may indicate A alone, both A and B, and B alone. In addition, the character "/" in the document indicates an "or" relation between the two objects before and after the character.

The term "a plurality of" recited in the embodiments of the present application means two or more.

The term "at least one" recited in the embodiments of the present application means one or more.

The descriptions such as first and second recited in the embodiments of the present application are for illustrative purposes and for distinguishing the described objects. There is no sequential order for these descriptions, and there is no specific limitation on the number of devices in the embodiments of the present application, not constituting any limitation on the embodiments of the present application.

As described in the background, it proposes an urgent problem for the network devices as of the model management for various AI models or ML models deployed on the terminal devices.

In view of the foregoing, an embodiment of the present application provides a communication method, where a network device allocates a model identifier for a first model deployed on a terminal device, or the terminal device sends a generated model identifier to the network device for approval, thereby ensuring consistence of knowledge of the model identifier of the first model between the network device and the terminal device ,facilitating subsequent model management functions and ensuring model performance.

Firstly, some terms involved in the embodiments of the present application are introduced to facilitate understanding by those skilled in the art.
1. Terminal device. The terminal device in the embodiments of the present application may refer to various forms of a User Equipment (UE), a access terminal, a subscriber unit, a subscriber station, a mobile station, a Mobile Stations (MS), a remote station, a remote terminal, a mobile device, a user terminal, a terminal equipment, a wireless communication device, a user agent, or a user apparatus. The terminal may also be a cellular phone, a cordless phone, a Session Initiation Protocol (SIP) phone, a Wireless Local Loop (WLL) station, a Personal Digital Assistant (PDA), a handheld device with wireless communication function, a computing device, or other processing devices connected to a wireless modem, an in-vehicle device, a wearable device, a terminal in a future 5G network, or a terminal in a future evolved Public Land Mobile Network (PLMN), etc., which does not propose limitation on the embodiments of the present application. In some embodiments of the present application, the terminal device may also be an apparatus with transceiver functionality, such as a chip system. The chip system may include a chip and may also include other discrete devices and among other things.
2. Access network device. The access network device in the embodiments of the present application may refer to a device that provides wireless communication functions for terminals, such as a radio access network (RAN) device or an access network element. The access network device may support at least one wireless communication technology, such as LTE, NR, etc. and among other things. For example, the access network device may be a base station (BS) (also referred to as a base station equipment), a device providing base station functionality in 2nd-generation (2G) networks including Base Transceiver Stations (BTS), a device providing base station functionality in 3rd-generation (3G) networks including Node B, a device providing base station functionality in 4th-generation (4G) networks including evolved NodeBs (eNB), a device providing base station functionality in Wireless Local Area Networks (WLAN) including an Access Point (AP), a device providing base station functionality in NR, a next generation node base station (gNB), and a continued evolving Node B (ng-eNB), where gNB and terminal devices communicate using NR technology and ng-eNB and terminal devices communicate using Evolved Universal Terrestrial Radio Access (E-UTRA) technology, and both gNB and ng-eNB may connect to the 5G core network. The access network device in the embodiments of the present application also includes a device providing wireless communication functionality in future new communication systems, etc. In some embodiments, the access network device may also be an apparatus equipped with functionality of providing wireless communication for terminals, such as a chip system. For example, the chip system may include a chip and may also include other discrete devices.

In some embodiments, the access network device may refer to a Centralized Unit (CU) of a base station, or a Distributed Unit (DU) of a base station, or a CU control plane (CU-CP) of a base station, or a DU user plane (DU user plane, DU-UP) of a base station, etc.

3. Core network device. The core network device in the embodiments of the present application may refer to an Access and Mobility Management Function (AMF) entity, a Session Management Function (SMF) entity, or a User Plane Function (UPF) entity, an Operation Administration and Maintenance (OAM) entity, a Location Management Function (LMF) entity, a Network Data Analytics Function (NWDAF) entity, etc. in a communication system. For example, the core network device may be a 5G Core network (5GC) device.

4. Model. The model in the embodiments of the present application may refer to an AI model or a ML model deployed on a terminal device. For example, the model may include a supervised learning model, an unsupervised learning model, a reinforcement learning model, and a neural network model, etc.

The model deployed on the terminal device in the context of the embodiments of the present application may refer to a model to be deployed on the terminal device, or a model already deployed on the terminal device.
5. Model identifier (model ID). The model identifier in the embodiments of the present application refers to an identifier of a model, which may be used to distinguish the model from other models. The model identifier may be a global identifier or a private identifier.
6. First model. The first model in the embodiments of the present application may refer to an arbitrary model deployed on a terminal device. For example, the first model may be a model newly generated by the terminal device. Alternatively, the first model may be a model updated by the terminal device based on an existing model. Alternatively, the first model may be a model generated by the network device and then deployed on the terminal device. Alternatively, the first model may be an arbitrary existing model of the terminal device.
7. Network device. The network device in the embodiments of the present application may refer to an access network device or a core network device.

The specific embodiments of the present invention are illustrated in detail below with reference to the accompanying drawings.

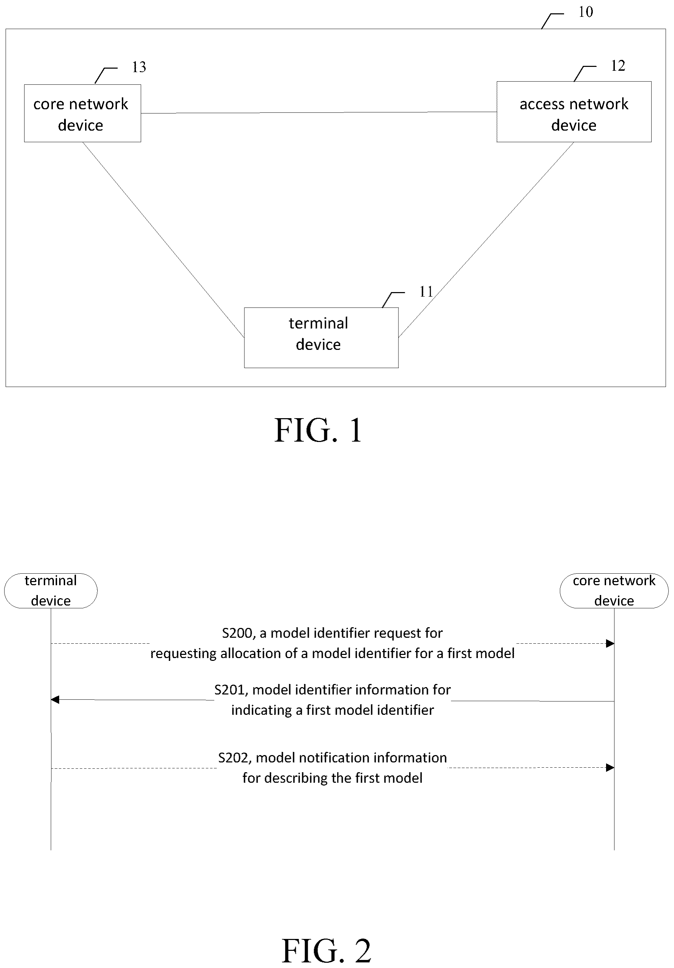

Referring to FIG.1, FIG. 1 is a schematic architecture diagram of a communication system in an embodiment of the present application. The communication system applicable to the embodiments of the present application may be a Fifth Generation (5th-generation, 5G) system (such as a New Radio (NR) system), a future evolved system, or a system integrating a variety of communication technologies, etc. The 5G system may be a Non-Standalone (NSA) 5G system or a Standalone (SA) 5G system and among other things. The solutions of the embodiments of the present application may also be applicable to various new future communication systems, for example, a Sixth Generation (6th generation, 6G) communication system, etc.

Firstly, non-limiting descriptions of the communication system and application scenarios applicable to the embodiments of the present application are provided below with reference to FIG. 1.

As shown in FIG. 1, the communication system 10 may include one or more terminal devices, such as the terminal device 11 shown in FIG. 1. The communication system 10 may also include one or more access network devices, such as the access network device 12 shown in FIG. 1. The communication system 10 may also include a core network device, such as the core network device 13 shown in FIG. 1.

The terminal device 11 may communicate with the core network device 13 via the access network device 12. Specifically, the terminal device 11 may be communicatively connected to the access network device 12, and the access network device 12 may be communicatively connected to the core network device 13.

Specifically, the access network device 12 and the core network device 13 may communicate via an NG interface. Alternatively, the terminal device 11 may also be communicatively connected to the core network device 13 directly. Specifically, the terminal device 11 may exchange signaling or data with the core network device 13, and the exchanged signaling or data is transparent to the access network device 12.

In an application scenario of the present application, the terminal device 11 generates a new first model. In the method provided by the embodiments of the present application, the terminal device 11 may learn the model identifier allocated by the network device (such as the access network device 12 or the core network device 13) for the newly generated first model, ensuring consistence of knowledge of the newly generated first model between the network device and the terminal device 11.

In another application scenario of the present application, the terminal device 11 updates an existing model to obtain a first model. In the method provided by the embodiments of the present application, the terminal device 11 learns the model identifier allocated by the network device (such as the access network device 12 or the core network device 13) for the first model obtained by update, ensuring consistence of knowledge of the updated model between the network device and the terminal device 11.

In yet another application scenario of the present application, the network device (such as the access network device 12 or the core network device 13) generates a first model or obtains a first model through model update and deploys the first model on the terminal device 11. Furthermore, in the method provided by the embodiments of the present application, the network device may also indicate the model identifier allocated for the first model to the terminal device 11 to complete the deployment of the first model. This ensures consistence of knowledge of the newly deployed model between the network device and the terminal device 11.

In still another application scenario of the present application, the first model is an arbitrary existing model deployed on the terminal device 11. In the method provided by the embodiments of the present application, based on model management strategies, if the network device needs to update the model identifier of the first model, the network device may complete the update of the model identifier of the first model and inform the terminal device 11 of the updated model identifier, so that consistence of knowledge of the model identifier of the first model between the network device and the terminal device 11 may be achieved, thus facilitating subsequent model management.

Detailed descriptions of the communication methods provided by the embodiments of the present application are provided below.

Embodiment 1: A core network device allocates a model identifier for a first model, and a terminal device determines the model identifier allocated by the core network device as the model identifier of the first model.

Referring to FIG. 2, FIG. 2 is a schematic diagram illustrating signaling interaction according to a first communication method in an embodiment of the present application. The method shown in FIG. 2 may include S201. Furthermore, the method shown in FIG. 2 may also include S200 and/or S202.Alphabet S recited in the numbering of each step indicates "Step".

S201, the core network device sends model identifier information to the terminal device, and the model identifier information is used to indicate a first model identifier.

As an implementation, the core network device allocate a model identifier for the first model proactively. Specifically, the core network device sends model identifier information to the terminal device proactively to indicate the first model identifier to the terminal device.

For example, the model identifier information may be carried in a request message for model generation, or may be carried in Radio Resource Control (RRC) signaling, or may be carried in Downlink Control Information (DCI), or may be carried in a Medium Access Control-Control Element (MAC CE).

As another implementation, the terminal device requests that the core network device allocate a model identifier for the first model.

Optionally, S200 may be performed prior to S201.

Specifically, the terminal device sends a model identifier request to the core network device, the model identifier request may be used to request allocation of a model identifier for the first model. In response to the model identifier request from the terminal device, the core network device sends model identifier information to the terminal device to indicate the first model identifier to the terminal device.

For example, the model identifier request may include model identifier allocation related information which may be used to assist in allocation of model identifier for the first model. The core network device may allocate the model identifier for the first model based on the model identifier allocation related information. In other words, the core network device may determine the first model identifier based on the model identifier allocation related information.

Specifically, the model identifier allocation related information may comprise at least one of:
a released model identifier, information on training data of a model, model structure information, model function information, model input information, model output information, and model priority information.

A released model identifier may refer to a model identifier released by a terminal device. A released model identifier may be understood as a model identifier that is no longer used by a terminal device.

In practical applications, if the terminal device detects that update to a model is necessary (for example, the model' s performance deteriorates, etc.), the terminal device may release the current model identifier of that model and send the released model identifier to the core network device. After receiving the released model identifier, the core network device may learn that a model needs to be re-allocated a model identifier.

Information on training data of a model may refer to information used to describe or indicate the training data of the model. For example, the type of training data, the amount of training data, the precision of training data, the way of preprocessing training data, and the data distribution characteristics of training data, etc.

Model structure information may refer to information used to describe or indicate the model structure. For example, the number of input layers of the model, the number of output layers, the number of hidden layers, the number of neurons contained in each layer, and the main structure of the model, etc. For example, the main structure of the model could be Convolutional Neural Networks (CNN), Long Short-Term Memory (LSTM) network, Transformer, convolution kernel parameters, etc.

Model function information may refer to information used to describe or indicate the function of the model. For example, the function of the model may be positioning, channel state measurement, and beam management, etc., and the present embodiment is not limit in terms of the function of the model.

Model input information may refer to information used to describe or indicate the input parameters of the model. For example, the dimension of input data, the precision of input data, the data distribution characteristics of input data, and the way of preprocessing input data, etc.

Model output information may refer to information used to describe the output parameters of the model. For example, the type of output data, the dimension of output data, and the precision of output data, etc.

Model priority information may refer to information indicating the priority of the model.

In S201, after receiving the model identifier information, the terminal device may also associate the first model identifier with the first model. That is, the terminal device may determine the first model identifier indicated by the model identifier information as the model identifier of the first model.

It should be noted that in the solution of the present embodiment, S200 and/or S201 may be performed before the deployment of the first model is completed, or may be performed after the deployment of the first model is completed.

It should also be noted that the deployment of the first model being completed may refer to the end of the generation process or the update process of the first model. "Before the deployment of the first model is completed" may include before the start of the generation or update of the first model, and in the process of the generation or update of the first model.

For example, S200 and/or S201 may be performed before the start of the generation or update of the first model, or S200 and/or S201 may be performed in the process of the generation or update of the first model.

Optionally, S202 may also be performed.

Specifically, in S202, the terminal device sends model notification information to the core network device, and the model notification information is used to describe the first model.

Specifically, after the deployment of the first model is completed, the terminal device may send model notification information to the core network device.

For example, the model notification information comprises at least one of the following information on the first model: the model identifier of the first model (i.e. the first model identifier), model function information, model size information, model complexity information, model application scenario information, model structure information, model configuration information, model input information, model output information, and model priority information.

Model size information may be used to describe or indicate the volume of the model, in other words, model size information may refer to the storage space required by the model. More specifically, the volume may be expressed in Bytes, Kilobytes (KB), Megabytes (MB), etc.

Model complexity information may be used to describe or indicate the information on complexity of execution/inference of the model. Specifically, model complexity information may be expressed in floating-point operations per second (FLOPs), or multiply-accumulate operations, or number of parameters, or Tera Operations Per Second (TOPS), or Tera Operations (TO), or power consumption, etc.

Model application scenario information is used to describe or indicate the application scenario of the model and may include one or more of: urban, non-urban, high-speed mobility, low speed, constant speed, stationary, base station height, terminal device height, preset Inter-Site Distance (ISD), terminal device movement speed, terminal device distribution, effective area of the model, etc.

The effective area of the model may include one or more of:
base station height, terminal device height, preset Inter-Site Distance (ISD), terminal device movement speed, indoor terminal device distribution, outdoor terminal device distribution, frequency, Registration Area (RA), Tracking Area (TA), cell, beam, etc.

For example, the preset inter-site distance may be 200 meters (m) or 500 m. The movement speed of the terminal device may be 3 km/h, 30 km/h, 60 km/h, etc. As another example, outdoor terminal device distribution and indoor terminal device distribution may be 100% and 0% respectively, or outdoor terminal device distribution and indoor terminal device distribution may be 20% and 80% respectively.

Cells may include urban macrocell (Uma), suburban macrocell (Sma), urban microcell (Umi), etc.

Beams may include a receive (Rx) beam and a downlink (DL) transmit (Tx) beam of the terminal device. For example, the Rx beam of the terminal device may specifically include the number of beams (including the number of panels and antenna array size of the terminal device), etc. The DL Tx beam of the terminal device may specifically include a DL Tx beam codebook including various beam (pair) sets A and gNB antenna array size, etc.

Model configuration information may be used to describe or indicate the configuration parameters of the model and may include one or more of: the way of processing model input data (such as quantization, normalization, de-quantization, de-normalization, etc.), the way of processing model output data (such as quantization, normalization, de-quantization, de-normalization, etc.), data precision (e.g., float 64/32/16 or int16/8/4, etc.), model complexity (e.g., FLOPs, number of parameters, model volume, power consumption, etc.), other configurations (e.g., antenna port, bandwidth, other configurations of the terminal device, etc.), model structure (e.g., CNN, DNN, Transformer, etc.)

Accordingly, in S202, after receiving the model notification information, the core network device may record and maintain the model identifier of the first model and other information of the first model.

Optionally, the core network device may also send the model notification information to one or more access network devices, so that consistence of knowledge of the model identifier of the first model may be achieved among a plurality of network devices in the communication system, which satisfies the needs of mobility of the terminal devices, etc.

From the above, in the solution shown in FIG. 2, the core network device indicates the model identifier allocated for the first model to the terminal device. Since the model identifier of the first model is obtained by the terminal device from the core network device, consistence of knowledge of the model identifier of the first model may be achieved between the core network device and the terminal device, facilitating subsequent model management functions by the core network device and ensuring model performance.

Furthermore, the method shown in FIG. 2 may also be applied to scenarios where the core network device allocates model identifiers for a plurality of models deployed on the terminal device.

Specifically, in case of a plurality of models, in S201, the model identifier information may be used to indicate a plurality of model identifiers, and the terminal device may use the plurality of model identifiers indicated in the model identifier information as a respective model identifier for the plurality of models.

For example, the model identifier information may include model identifier 1 and model identifier 2. The terminal device may use model identifier 1 as the model identifier for the first model and model identifier 2 as the model identifier for the second model. The first model and the second model are different models deployed on the terminal device.

Embodiment 2: The core network device allocates a model identifier selection list to the terminal device, and the terminal device selects a model identifier for the first model from the model identifier selection list.

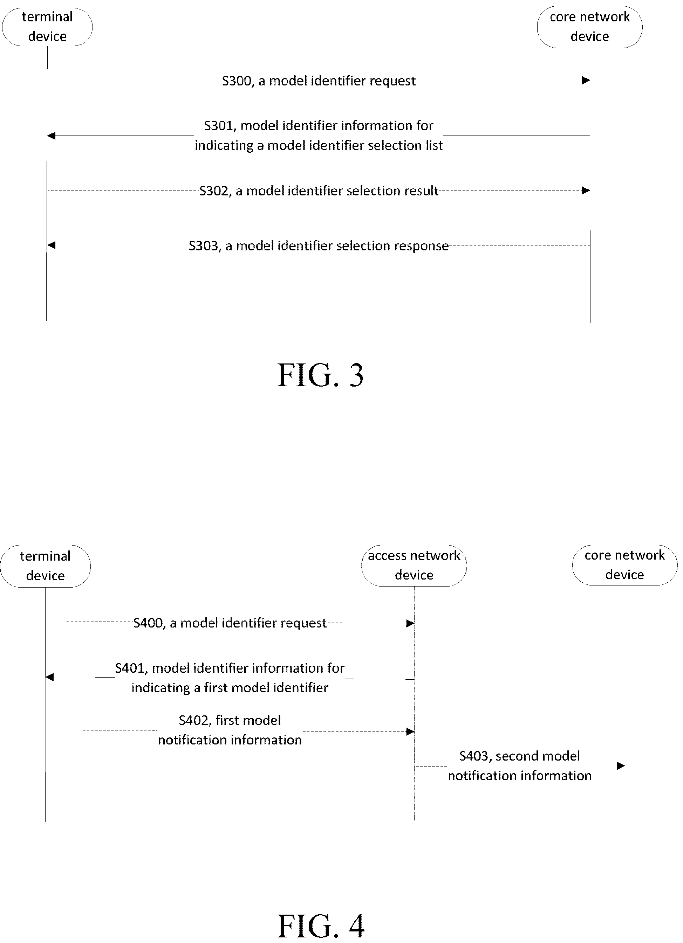

Referring to FIG. 3, FIG. 3 is a schematic diagram illustrating signaling interaction according to a second communication method in an embodiment of the present application. The method shown in FIG. 3 includes S301. Furthermore, the method shown in FIG. 3 may also include S300 and/or S302 and/or S303.

S301, the core network device sends model identifier information to the terminal device, and the model identifier information is used to indicate a model identifier selection list.

The model identifier selection list may include one or more model selection identifiers.

In a specific embodiment, the core network device may indicate the model identifier selection list to the terminal device in a full configuration. Specifically, the model identifier information contains all the model selection identifiers in the model identifier selection list. Alternatively, the core network device may also indicate the model identifier selection list to the terminal device in an incremental configuration. Specifically, the model identifier information contains one or more model identifiers, and the terminal device updates a locally existing model identifier list according to the one or more model identifiers contained in the model identifier information to obtain an up-to-date model identifier selection list.

As an implementation, the core network device indicates the model identifier selection list proactively to the terminal device. That is, the core network device sends the model identifier information proactively to the terminal device.

As another implementation, the terminal device requests that the core network device allocate a model identifier for the first model.

Optionally, S300 may be performed prior to S301.

Specifically, the terminal device sends a model identifier request to the core network device, and the model identifier request may be used to request allocation of a model identifier for the first model. In response to the model identifier request from the terminal device, the core network device sends model identifier information to the terminal device to indicate the model identifier selection list to the terminal device.

For example, the model identifier request may include model identifier allocation related information. Detailed descriptions of the model identifier request and model identifier allocation related information may be referenced with regard to the related descriptions of FIG. 2.

Further, after receiving the model identifier selection list, the terminal device may select a model identifier from the model identifier selection list. The model identifier selected by the terminal device may be denoted as the first model identifier.

For example, the terminal device may select a model identifier randomly from the model identifier selection list, i.e., the first model identifier is selected randomly. Alternatively, the terminal device may select a model identifier with the smallest identifier value from the model identifier selection list. That is, the first model identifier is a model identifier with the smallest identifier value in the model identifier selection list.

It should be noted that the terminal device may also select a model identifier from the model identifier selection list according to other selection rules, which does not impose limitation on the embodiment.

Optionally, S302 may be further performed.

In S302, the terminal device sends a model identifier selection result to the core network device.

The model identifier selection result is used to indicate the first model identifier selected by the terminal device.

In S302, after receiving the model identifier selection result, the core network device may make a decision on the first model identifier to determine whether to approve the first model identifier as the model identifier of the first model.

Optionally, the method may proceed to S303, where the terminal device is informed of the core network device's approval status regarding the model identifier selection result.

In S303, the core network device sends a model identifier selection response to the terminal device.

The model identifier selection response may be used to indicate the approval status of the model identifier selection result. Specifically, the model identifier selection response may be used to indicate the core network device's approval or disapproval of the model identifier selection result. Descriptions on what is indicated by the model identifier selection response under different situations are provided in detail below.

Situation 1: The core network device approves the model identifier selection result.

Specifically, the model identifier selection response is used to indicate that the core network device approves the model identifier selection result. In other words, the model identifier selection response includes an Acknowledgement (ACK) message from the core network device for the first model identifier.

Further, in response to the model identifier selection response, the terminal device may associate the first model identifier with the first model. That is, the terminal device determines the first model identifier as the model identifier of the first model.

Situation 2: The core network device disapproves the model identifier selection result. For example, if the model identifier indicated by the model identifier selection result has been allocated to a model deployed on another terminal device, the core network device may disapprove the model identifier selection result in S302.

Specifically, the model identifier selection response is used to indicate that the core network device disapproves the model identifier selection result. In other words, the model identifier selection response includes a Negative Acknowledgement (NACK) message from the core network device for the first model identifier.

As an implementation, if the core network device disapproves the model identifier selection result, the core network device may indicate a model identifier recommended or expected by the core network device to the terminal device.

Specifically, the model identifier selection response may also be used to indicate a second model identifier different from the first model identifier.

Further, after receiving the model identifier selection response, the terminal device may associate the second model identifier with the first model. That is, the terminal device determines the second model identifier as the model identifier of the first model.

As another implementation, if the core network device disapproves the model identifier selection result, after the terminal device receives the model identifier selection response, it may generate a model identifier for the first model.

In other words, if the core network device disapproves the model identifier selection result, the model identifier selection response may also be used to indicate the terminal device to generate a model identifier for the first model.

Further, after the terminal generates the model identifier for the first model, it may send the generated model identifier to the core network device or access network device for approval.

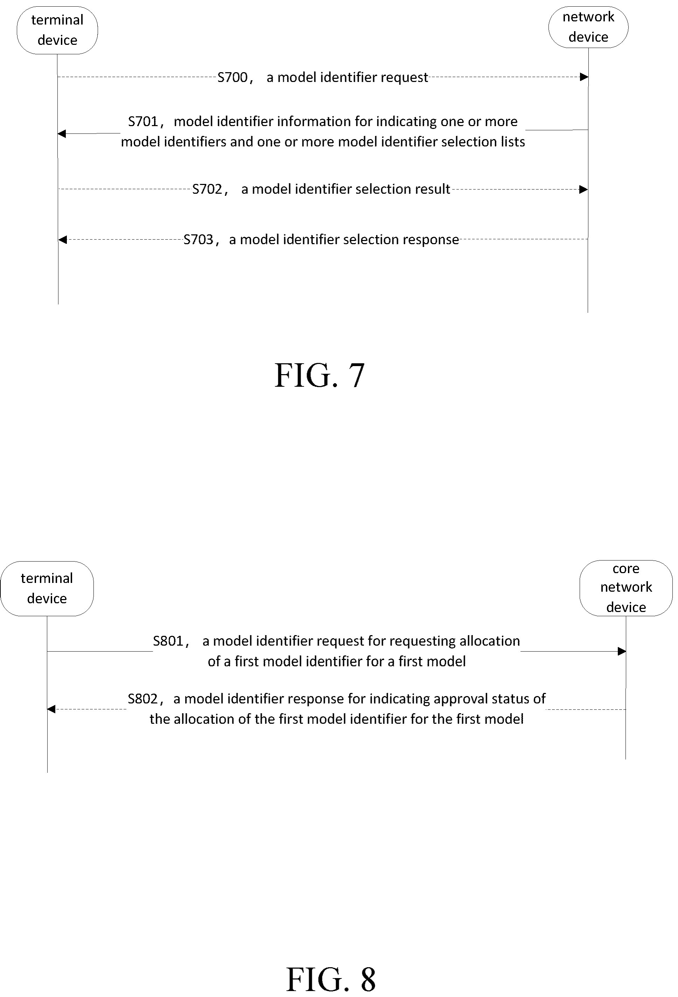

Detailed descriptions regarding the terminal device sending the generated model identifier to the network device for approval may be referenced with respect to the related descriptions below regarding FIG. 8, FIG. 9, and FIG. 11, which will not be repeated here.

As another implementation, if the core network device disapproves the model identifier selection result, after the terminal device receives the model identifier selection response, the terminal device may reselect a model identifier for the first model. In other words, the model identifier selection response is also used to indicate to reselect a model identifier for the first model.

For example, the terminal device may reselect a model identifier for the first model from the model identifier selection list indicated by the model identifier information in S301.

As another example, the model identifier selection response may also be used to indicate a model identifier reselection list. After receiving the model identifier selection response, the terminal device may determine the model identifier reselection list first and then reselect a model identifier for the first model from the model identifier reselection list. In other words, the model identifier selection response may also be used to update the selection range of model identifiers. Compared to the model identifier selection list, the model identifier reselection list has a new selection range for model identifiers.

Further, the terminal device may return to perform S302 and S303 until the core network device approves the model identifier selected by the terminal device for the first model.

It should be noted that S301 and/or S302 and/or S303 may be performed before the deployment of the first model is completed, or may be performed after the deployment of the first model is completed.

Optionally, after the first model is generated, the terminal device may send a model notification information to the core network device. Alternatively, if S302 is performed after the deployment of the first model is completed, the terminal device may also send model notification information together with sending the model identifier selection result. Detailed descriptions of the model notification information may be referenced with respect to the above related descriptions regarding FIG. 2, which will not be repeated here.

Furthermore, in other embodiments of the present application, after the terminal device sends the model identifier selection result, if a model identifier selection response is not received within a period of time, it may be considered that the core network device approves the model identifier selection result or disapproves the model identifier selection result.

In a non-limiting example, the terminal device sends the model identifier selection result before the deployment of the first model is completed, in order to preempt an available model identifier as soon as possible.

Specifically, in the network, there may be a plurality of terminal devices in request for allocation of model identifier in a same period of time. However, model identifier resources in the network are limited, and it may be the case that different terminal devices select the same model identifier. Accordingly, the terminal device may send the model identifier selection result before the deployment of the first model is completed, without waiting for the deployment to complete, promoting the preemption of an available model identifier as soon as possible.

Furthermore, the core network device may update the model identifier selection list periodically to exclude model identifiers that have been occupied in the model identifier selection list, which may prevent the terminal device from selecting an occupied model identifier and help reduce signaling overhead in the process of model identifier allocation. Alternatively, the core network device may update the model identifier selection list periodically, add released model identifiers to the model identifier selection list again to make full use of model identifier resources.

Specifically, for any released model identifier, if the model identifier is a private identifier, the core network device may reclaim that model identifier directly. A reclaimed model identifier may be considered as a model identifier that is available for reallocation. For example, the model identifier may be added to the model identifier selection list, or the model identifier may be indicated to other terminal devices for use.

If the model identifier is a global model identifier, the core network device may only reclaim the model identifier after all terminal devices occupying that model identifier have released it.

For example, a model identifier released by a terminal device may be sent to the access network device via Uplink Control Information (UCI), or MAC CE, or RRC signaling, and then forwarded by the access network device to the core network device. Alternatively, a model identifier released by a terminal device may be indicated to the core network device via Non-Access Stratum (NAS) information.

Furthermore, in other embodiments of the present application, after the terminal device selects the first model identifier, S302 and S303 may not be performed. That is, the terminal device may associate the selected model identifier with the first model directly.

From the above, in the solution shown in FIG. 3, the terminal device may obtain the model identifier selection list for the first model from the core network device. After the terminal device selects a model identifier for the first model, the core network device may approve the model identifier selected by the terminal device. The terminal device uses the model identifier approved by the core network device as the model identifier of the first model, thereby ensuring consistence of knowledge of the first mode between the terminal device and the core network device, which in turn facilitates subsequent model management functions and ensures model performance.

Furthermore, the solution shown in FIG. 3 may also be applied to scenarios where the core network device allocates model identifiers for a plurality of models deployed on the terminal device.

Specifically, the core network device may send a model identifier selection list to the terminal device. The terminal device may select a model identifier from the model identifier selection list for each model respectively.

For example, a plurality of models may share one model identifier selection list. That is, the model identifier information includes a single model identifier selection list. In this situation, the terminal device may select a model identifier for a respective model in sequence from the model identifier selection list according to priorities of the models. For example, the terminal device may select a model identifier for a respective model in sequence from the model identifier selection list in a descending order of priorities. Optionally, for selected model identifiers, they may be removed from the model identifier selection list.

As another example, a plurality of models may use different model identifier selection lists respectively. Specifically, the model identifier information may include a plurality of model identifier selection lists, i.e., the core network device may configure a plurality of model identifier selection lists. For each model, the terminal device may select a model identifier for the model from the model identifier selection list corresponding to the model.

Furthermore, for a plurality of models, the model identifier selection result in S302 may include the model identifiers selected by the terminal device for respective models. Correspondingly, the model identifier selection response in S303 may include the approval status for respective selected model identifiers. The approval status of different model identifiers may be bound together or may be independent of each other. In other words, the approval status of different model identifiers may be the same or may be different. For example, the core network device may approve the model identifier selected by the terminal device for the first model and disapprove the model identifier selected by the terminal device for the second model.

It should be noted that descriptions on the differences between the method shown in FIG. 3 and the method shown in FIG. 2 are provided above specifically. More descriptions of the method shown in FIG. 3 may be referenced with respect to the above related descriptions, which will not be repeated here.

Embodiment 3: The access network device allocates a model identifier for the first model, and the terminal device determines the model identifier allocated by the access network device as the model identifier of the first model.

Referring to FIG. 4, FIG. 4 is a schematic diagram illustrating signaling interaction according to a third communication method in an embodiment of the present application; The method shown in FIG. 4 may include S401. Furthermore, the method shown in FIG. 4 may also include S400 and/or S402 and/or S403.

S401, the access network device sends model identifier information to the terminal device, and the model identifier information is used to indicate a first model identifier.

As an implementation, the access network device allocates a model identifier for the first model proactively. Specifically, the access network device sends the model identifier information to the terminal device proactively to indicate the first model identifier to the terminal device.

As another implementation, the terminal device requests that the access network device allocate a model identifier for the first model.

Specifically, S400 may be performed prior to S401.That is, the terminal device sends a model identifier request to the access network device, and the model identifier request may be used to request allocation of a model identifier for the first model. In response to the model identifier request from the terminal device, the access network device sends model identifier information to the terminal device to indicate the first model identifier to the terminal device.

Detailed descriptions of the model identifier request and model identifier information in FIG. 4 may be referenced with respect to the above related descriptions regarding FIG. 2.

In S401, after receiving the model identifier information, the terminal device associates the first model identifier indicated by the access network device with the first model.

In a specific embodiment, S400 and/or S401 may be performed before or after the deployment of the first model is completed.

Optionally, the method shown in FIG. 4 may also include S402 and/or S403.

S402, the terminal device sends first model notification information to the access network device, and the first model notification information is used to describe the first model.

Specifically, after the deployment of the first model is completed, the terminal device may send first model notification information to the access network device.

Detailed descriptions of the first model notification information may be referenced with respect to the above related descriptions regarding model notification information, which will not be repeated here.

S403, the access network device sends second model notification information to the core network device, and the second model notification information is used to describe the first model.

For example, the access network device may send the second model notification information to the core network device after receiving the first model notification information.

As another example, the access network device may send the second model notification information to the core network device after sending the model identifier information. That is, after allocating the model identifier for the first model to the terminal device, the access network device sends the second model notification information to the core network device.

Detailed descriptions of the second model notification information may be referenced with respect to the above related descriptions regarding model notification information, which will not be repeated here.

Furthermore, the access network device may also send the second model notification information to other access network devices to meet the needs of mobility of the terminal devices, etc. For example, the access network device sends the second model notification information to other access network devices via an Xn interface.

From the above, in the solution shown in FIG. 4, the access network device indicates the model identifier allocated for the first model to the terminal device. Accordingly, consistence of knowledge of the first model and its model identifier may be achieved between the network device and the terminal device in the communication system, facilitating subsequent model management functions by the core network device and guaranteeing model performance.

Furthermore, the method shown in FIG. 4 may also be applied to scenarios where the access network device allocates model identifiers for a plurality of models deployed on the terminal device.

Specifically, in case of a plurality of models, in S401, the model identifier information may be used to indicate a plurality of model identifiers, and the terminal device may use the plurality of model identifiers indicated in the model identifier information as the model identifiers for the plurality of models, respectively.

For example, the model identifier information may include model identifier 1 and model identifier 2. The terminal device may use model identifier 1 as the model identifier for the first model and use model identifier 2 as the model identifier for the second model. The first model and the second model are different models deployed on the terminal device.

Embodiment 4: The access network device indicates a model identifier of the first model to the terminal device, and the model identifier indicated by the access network device is a model identifier that has been successfully registered with the core network device.

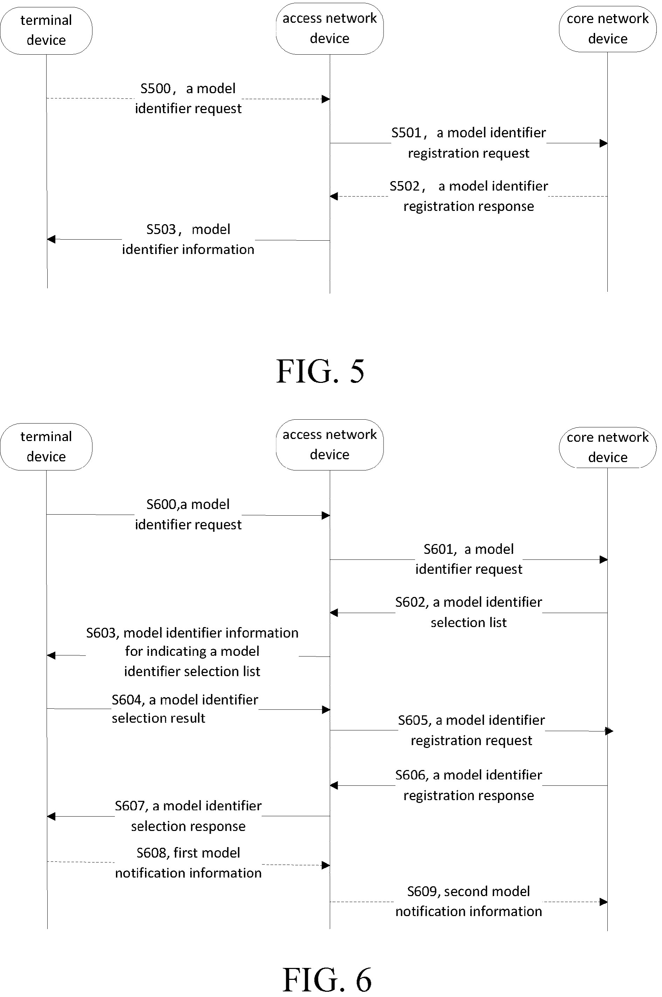

Referring to FIG. 5, FIG. 5 is a schematic diagram illustrating signaling interaction according to a fourth communication method in an embodiment of the present application. The method shown in FIG. 5 may include S501 and S503.Furthermore, the method shown in FIG. 5 may also include S500 and/or S502.

S501, the access network device sends a model identifier registration request to the core network device.

The model identifier registration request is used to request registration of the model identifier of the first model. For example, the access network device generates or selects a first model identifier for the first model, and the model identifier registration request may include the first model identifier. That is, the access network device requests to register the first model identifier as the model identifier of the first model.

As an implementation, the access network device sends the model identifier registration request proactively to the core network device. For example, the access network device may send the model identifier registration request proactively to the core network device based on the requirements of model management.

As another implementation, the model identifier registration request is sent in response to a request from the terminal device.

Optionally, S500 may be performed prior to S501.

Specifically, in S500, the terminal device sends a model identifier request to the access network device. Detailed descriptions of the model identifier request may be referenced with respect to the above related descriptions of FIG. 2 to FIG. 4, which will not be repeated here.

Further, in response to the model identifier request, the access network device sends the model identifier registration request to the core network device.

Optionally, the method shown in FIG. 5 may also include S502.

S502, the core network device sends a model identifier registration response to the access network device, and the model identifier registration response is used to indicate the registration status of the model identifier allocated for the first model. Descriptions of what is indicated by the model identifier registration response under different situations are provided in detail below.

Situation 1: The core network device approves the registration.

Specifically, the core network device approves the registration of the first model identifier as the model identifier of the first model. In other words, the model identifier registration response includes an ACK message from the core network device for the first model identifier.

Further, S503 may be performed, i.e., the access network device may send model identifier information to the terminal device, and the model identifier information is used to indicate the first model identifier. Thus, the access network device allocates the successfully registered first model identifier to the first model.

Situation 2: The core network device disapproves the registration.

Specifically, the core network device disapproves the registration of the first model identifier as the model identifier of the first model. In other words, the model identifier registration response includes a NACK message from the core network device for the first model identifier.

As an implementation, if the core network device disapproves the first model identifier, it may indicate a recommended or expected model identifier to the access network device.

Specifically, the model identifier registration response may also be used to indicate a second model identifier different from the first model identifier.

Further, after receiving the model identifier registration response, the access network device may perform S503. In this case, the model identifier information is used to indicate the second model identifier.

As another implementation, if the core network device disapproves the first model identifier, then after the access network device receives the model identifier registration response, the access network device may re-determine a model identifier for the first model. In other words, if the core network device disapproves the model identifier selection result, the model identifier registration response may be used to indicate the access network device to re-determine a model identifier for the first model.

Further, after the access network device re-determines a third model identifier for the first model, S501 and S502 may be performed until the model identifier determined by the access network device is successfully registered.

Further, the access network device may perform S503, i.e., the access network device sends model identifier information to the terminal device, and the model identifier information is used to indicate the successfully registered model identifier.

After receiving the model identifier information, the terminal device may determine the model identifier indicated by the first model as the model identifier of the first model.

Furthermore, in other embodiments of the present application, if the access network device does not receive a model identifier registration response within a period of time after sending the model identifier registration request, it may be considered that the core network device approves the model identifier indicated by the model identifier registration request.

It should be noted that descriptions of the differences between the method shown in FIG. 5 and the methods shown in FIG. 2 to FIG. 4 are provided above. Detailed descriptions of the method shown in FIG. 5 may be referenced with respect to the above related descriptions, which will not be repeated here.

From the above, in the solution shown in FIG. 5, the access network device indicates the model identifier of the first model to the terminal device, and the model identifier indicated by the access network device is a model identifier that has been successfully registered with the core network device. Accordingly, consistence of knowledge of the first model and its model identifier may be achieved between the network devices and the terminal devices in the communication system, which in turn facilitates subsequent model management functions by the network devices and ensures model performance.

Furthermore, the solution shown in FIG. 5 may also be applied to scenarios where the access network device allocates model identifiers for a plurality of models deployed on the terminal device.

Specifically, in case of a plurality of models, in S501, the model identifier registration request is used to request registration of a model identifier for each model. For example, for the first model and the second model, the model identifier registration request may include model identifier 1 and model identifier 2. The model identifier registration request is used to request registration of model identifier 1 for the first model and registration of model identifier 2 for the second model.

Further, for a plurality of models, the model identifier registration response in S502 may include the registration status for each requested model identifier. The registration status of different model identifiers may be bound together or may be independent of each other. In other words, the approval status of different model identifiers may be the same or may be different. For example, for the above model identifier 1 and model identifier 2, the core network device may approve the registration of model identifier 1 as the model identifier of the first model and disapprove the registration of model identifier 2 as the model identifier of the second model.

Embodiment 5: The access network device allocates a model identifier selection list to the terminal device, and the terminal device selects a model identifier for the first model from the model identifier selection list.

Referring to FIG. 6, FIG. 6 is a schematic diagram illustrating signaling interaction according to a fifth communication method in an embodiment of the present application. The method shown in FIG. 6 may include S603. Optionally, the method shown in FIG. 6 may also include one or more steps of S600 to S602, and/or one or more steps of S604 to S609.

S603, the access network device sends model identifier information to the terminal device, and the model identifier information is used to indicate a model identifier selection list.

In S603, after receiving the model identifier selection list, the terminal device may select a model identifier from the model identifier selection list, denoted as a first model identifier.

As an implementation, the access network device indicates the model identifier selection list proactively to the terminal device.

As another implementation, the terminal device requests that the access network device allocate a model identifier for the first model.

Optionally, S600 may be performed prior to S603.Alternatively and optionally, S600 to S602 may be performed prior to S603.

In S600, the terminal device sends a model identifier request to the access network device. The model identifier request may include model identifier allocation related information.

For example, in response to the model identifier request, the access network device performs S603, i.e., in response to the model identifier request, the access network device sends model identifier information to the terminal device.

As another example, in response to the model identifier request, the access network device requests a model identifier selection list from the core network device.

Specifically, S601, the access network device sends a model identifier request to the access network device.

In response to the received model identifier request, the access network device may forward the model identifier request to the core network device.

S602, the core network device sends a model identifier selection list to the access network device.

It should be noted that detailed descriptions regarding model identifier information, model identifier selection list, model identifier request, and the terminal device selecting a model identifier from the model identifier selection list may be referenced with respect to the above related descriptions of FIG. 2 to FIG. 5 , which will not be repeated here.

Optionally, one or more steps of S604 to S609 are further performed.

S604, the terminal device sends a model identifier selection result to the access network device. The model identifier selection result may be used to indicate the first model identifier selected by the terminal device.

As an implementation, S607 may be performed after S604. Specifically, after receiving the model identifier selection result, the access network device may make a decision on the first model identifier to determine whether to approve the first model identifier as the model identifier of the first model.

Optionally, the method may proceed to S607. In S607, the core network device sends a model identifier selection response to the terminal device. The model identifier selection response may be used to indicate the approval status of the model identifier selection result.

As another implementation, S605 to S607 may be performed after S604.

Specifically, S605, the access network device sends a model identifier registration request to the core network device.

The model identifier registration request is used to request registration of the model identifier of the first model. Specifically, the model identifier registration request is used to request registration of the first model identifier as the model identifier of the first model. That is, in response to the model identifier selection result, the access network device sends the model identifier registration request to the core network device.

Optionally, S606, the core network device sends a model identifier registration response to the access network device.

S607, the access network device sends a model identifier selection response to the terminal device.

Specifically, the access network device may send the model identifier selection response based on the received model identifier registration response.

As mentioned above, the model identifier registration response may be used to indicate the registration status of the first model identifier.

If the core network device approves the registration, i.e., the model identifier registration response includes an ACK message for the first model identifier, then in S607, the model identifier selection response may include the ACK message for the first model.

If the core network device disapproves the registration, i.e., the model identifier registration response includes a NACK message for the first model identifier, the model identifier registration response may also indicate a recommended or expected model identifier to the access network device.

For example, the model identifier registration response may also be used to indicate a second model identifier different from the first model identifier selected by the terminal device.

Further, the model identifier selection response may be used to indicate the second model identifier.

If the core network device disapproves the registration, i.e., the model identifier registration response includes a NACK message for the first model identifier, the model identifier selection response in S607 may also be used to indicate the terminal device to reselect a model identifier for the first model.

Further, after the terminal device reselects a model identifier, it may return to S604 and proceeds to perform S604 to S607 until the model identifier reselected by the terminal device is successfully registered with the core network device.

Alternatively, if the number of failures to register the model identifier selected by the terminal device reaches a first number, the core network device may indicate a recommended model identifier in the model identifier registration response.

Detailed descriptions of the above model identifier selection result, model identifier registration request, model identifier registration response, and model identifier selection response may be referenced with respect to the above related descriptions of FIG. 2 to FIG. 5 , which will not be repeated here.

Optionally, the method shown in FIG. 6 may also include S608 and S609.

S608, the terminal device sends first model notification information to the access network device.

S609, the access network device sends second model notification information to the core network device.

In other embodiments, the first model notification information may also be sent in S604, and the second model notification information may also be sent in S605. Detailed descriptions of the first model notification information and the second model notification information may be referenced with respect to the above related descriptions regarding model notification information, which will not be repeated here.

From the above, in the solution shown in FIG. 6, the access network device indicates the model identifier selection list to the terminal device, and the terminal device selects a model identifier for the first model from the model identifier selection list. Furthermore, the core network device approves the model identifier selected by the terminal device from the model identifier selection list to ensure consistence of knowledge of the first model and its model identifier between the network devices and the terminal device in the communication system, which in turn facilitates subsequent model management functions by the network devices and ensures model performance.

Furthermore, the solution shown in FIG. 6 may also be applied to scenarios where the access network device allocates model identifiers for a plurality of models deployed on the terminal device.

Specifically, the access network device may send a model identifier selection list to the terminal device. The terminal device may select a model identifier from the model identifier selection list for each model respectively. The access network device may configure one or more model identifier selection lists for the terminal device to select as model identifiers.

It should be noted that detailed descriptions of the differences between the method shown in FIG. 6 and the methods shown above are provided above. More descriptions of the method shown in FIG. 6 may be referenced with respect to the above related descriptions, which will not be repeated here.

Embodiment 6: For a plurality of models deployed on the terminal device, different model identifier allocation methods may be used. For ease of description, a model of the plurality of models for which the model identifier is allocated and determined by the network devices is classified as a first type of model, and a model of the plurality of models for which the model identifier is determined based on a model identifier selection list allocated by the network devices is classified as a second type of model below.

Referring to FIG. 7, FIG. 7 is a schematic diagram illustrating signaling interaction according to a sixth communication method in an embodiment of the present application; In the method shown in FIG. 7, different models may use different ways of model allocation. The method shown in FIG. 7 may include S701.Optionally, the method shown in FIG. 7 may also include S700 and/or 702 and/or S703.

S701, the network device sends model identifier information to the terminal device, and the model identifier information is used to indicate one or more model identifiers and one or more model identifier lists.

In S701, the network device may refer to an access network device. Alternatively, the network device may also be a core network device. Alternatively, the network device may be an access network device and a core network device.

Specifically, assuming that a number of N models deployed on the terminal device are in request for model identifier allocation, the model identifier information may include a number of N1 model identifiers, where N1 < N, N is a positive integer greater than 1, and N1 is a positive integer. The terminal device may associate the number of N1 model identifiers with a number of N1 models of the first type, respectively.

Further, the model identifier information may also include a number of N2 model identifier lists. N2 is a positive integer.

For example, N2=1, and a same model identifier selection list is selected for the model identifiers of a number of (N-N1) models. Specifically, the terminal device may select a respective model identifier from this model identifier selection list for a number of (N-N1) models of the second type. For example, the terminal device may select a model identifier for a respective model of the second type in sequence according to the priorities of the models. For example, the terminal device may select a model identifier for a respective model in sequence from the model identifier selection list in a descending order of priorities.

As another example, N2 = N - N1. That is, the model identifiers of the number of (N-N1) models of the second type are selected from different model identifier selection lists. Specifically, for each model of the second type, the terminal device may select the model identifier for the model from the model identifier selection list corresponding to the model.

In a specific embodiment, as an implementation, the access network device sends model identifier information proactively to the terminal device. That is, the access network device allocates model identifiers for a plurality of models proactively.

As another implementation, the terminal device requests that the access network device allocate model identifiers for a plurality of models. That is, optionally, S700 may be performed prior to S701. In this situation, the model identifier information may include model identifier allocation related information for the plurality of models.

Further, after receiving the model identifier information, the terminal device may associate a respective model of the first type with its corresponding model identifier. For each model of the second type, the terminal device may select the model identifier for the model of the second type from the model identifier selection list.

Optionally, the method shown in FIG. 7 may also include S702 and S703.

S702, the terminal device sends a model identifier selection result to the network device.

The model identifier selection result is used to indicate the model identifiers selected by the terminal device for one or more models of the second type.

S703, the network device sends a model identifier selection response to the terminal device.

The model identifier selection response may be used to indicate the approval status of the model identifier selection result in S702. Specifically, the model identifier selection response may be used to indicate the approval status of the model identifiers selected for respective models of the second type.

It should be noted that detailed descriptions of the differences between the solution shown in FIG. 7 and the solutions described in FIG. 2 to FIG. 6 are provided above. More descriptions of the solution shown in FIG. 7 may be referenced with respect to the above related descriptions of FIG. 2 to FIG. 6 , which will not be repeated here.

Specifically, detailed descriptions of the model identifier request, model identifier selection list, model identifiers indicated by the model identifier information, model identifier selection result, model identifier selection response, etc. may be referenced with respect to the above related descriptions of FIG. 2 to FIG. 6.

Furthermore, FIG. 7 only shows the process of signaling interaction between the terminal device and the network device. When the network device includes an access network device and a core network device, the process of signaling interaction between the access network device and the core network device may be referenced with respect to the above related descriptions of FIG. 4 to FIG. 6.

From the above, in the solution shown in FIG. 7, different ways of model identifier allocation may be used for different models deployed on the terminal device. Thus, the solution in FIG. 7 may use different ways to allocate model identifiers for different models, providing better flexibility.

Embodiment 7: The terminal device generates a first model identifier for the first model proactively and then sends it to the core network device for approval.

Referring to FIG. 8, FIG. 8 is a schematic diagram illustrating signaling interaction according to a seventh communication method in an embodiment of the present application; The method shown in FIG. 8 may include S801. Optionally, it may also include S802.

S801, the terminal device sends a model identifier request to the core network device, and the model identifier request is used to request allocation of a first model identifier for the first model.

The first model identifier is generated by the terminal device for the first model. In other words, before S801, the terminal device generates the first model identifier, and then the terminal device sends the first model identifier to the core network device for approval.

In a specific embodiment, the terminal device may generate the first model identifier for the first model according to certain generation rules. For example, the first model identifier may be generated randomly, or the first model identifier may be calculated based on model identifier allocation related information.

Optionally, the model identifier request may include the model identifier allocation related information and/or the model notification information mentioned above. Detailed descriptions of the model identifier allocation related information and/or the model notification information may be referenced with respect to the above related descriptions regarding FIG. 2, which will not be repeated here.

Optionally, S802 may be further performed.

S802, the core network device sends a model identifier response to the terminal device, and the model identifier response is used to indicate approval status of the allocation of the first model identifier for the first model.

If the model identifier response indicates that the core network device approves the allocation of the first model identifier for the first model, the model identifier response may include an ACK message for the first model identifier. After receiving the model identifier response, the terminal device may associate the generated first model identifier with the first model.

If the model identifier response indicates that the core network device disapproves the allocation of the first model identifier for the first model, the model identifier response may also indicates a model identifier recommended by the core network device. For example, the model identifier response may be used to indicate a second model identifier. After receiving the model identifier response, the terminal device may associate the second model identifier with the first model.

Alternatively, if the model identifier response indicates that the core network device disapproves the allocation of the first model identifier for the first model, the model identifier response may also indicate the terminal device to regenerate a model identifier. Further, the terminal device may return to S801 and perform S801 and S802 until the core network device approves the allocation of the generated model identifier for the first model.

Alternatively, if the model identifier response indicates that the core network device disapproves the allocation of the first model identifier for the first model, the model identifier response may also indicate to select a model identifier for the first model.

For example, the model identifier response may include a model identifier selection list. After receiving the model identifier response, the terminal device may select a model identifier from the model identifier selection list.

Furthermore, in other embodiments, if the terminal device does not receive a model identifier response within a period of time after S801, it may be considered that the core network device approves the first model identifier or disapproves the first model identifier.

From the above, in the solution shown in FIG. 8, the terminal device generates a model identifier for the first model, then sends the generated model identifier to the core network device for approval, and determines the approved model identifier as the model identifier of the first model. Accordingly, consistence of knowledge of the first model and its model identifier may be ensured between the network devices and the terminal devices in the communication system, which in turn facilitates subsequent model management functions by the network devices and ensures model performance.

Furthermore, the solution shown in FIG. 8 may be applied to application scenarios where model identifiers are allocated for a plurality of models. Specifically, the terminal device may generate a respective model identifier for each model. Correspondingly, the model identifier request may be used to request allocation of the generated model identifiers for respective models. Correspondingly, the model identifier response may be used to indicate the approval status of the generated model identifiers for respective models.

It should be noted that detailed descriptions of the differences between the method shown in FIG. 8 and the methods shown in FIG. 2 to FIG. 7 are provided above. More descriptions of the method shown in FIG. 8 may be referenced with respect to the above specific descriptions.

Embodiment 8: The terminal device generates a first model identifier proactively for the first model and sends it to the access network device for approval.

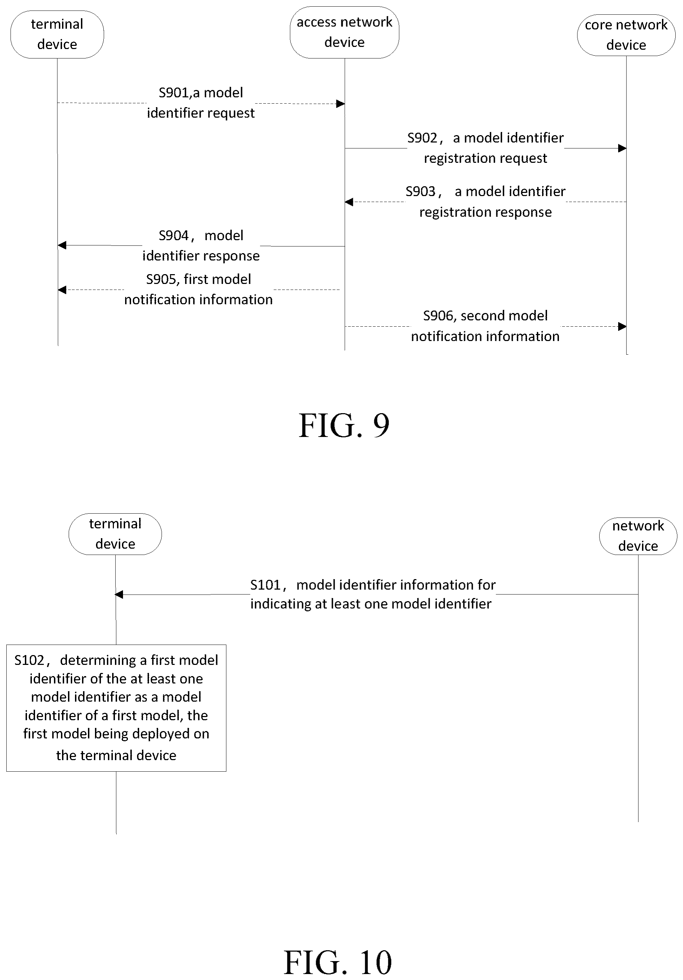

Referring to FIG. 9, FIG. 9 is a schematic diagram illustrating signaling interaction according to an eighth communication method in an embodiment of the present application;

S901, the terminal device sends a model identifier request to the access network device.

The model identifier request is used to request allocation of a first model identifier for the first model, where the first model identifier is generated by the terminal device for the first model.

Detailed descriptions of S901 may be referenced with respect to the above related descriptions regarding S801.

As an implementation, S904 may be performed after S901. Specifically, after receiving the model identifier request, the access network device may make a decision on the first model identifier to determine whether to approve the first model identifier as the model identifier of the first model.

S904, the access network device sends a model identifier response to the terminal device. Detailed descriptions of the model identifier response may be referenced with respect to the above related descriptions regarding FIG. 8, which will not be repeated here.

As another implementation, optionally, the method shown in FIG. 9 may include S902 and/or S903. S902 to S904 may be performed after S901. In this situation, the access network device forwards the first model identifier generated by the terminal device to the core network device for registration.

S902, the access network device sends a model identifier registration request to the core network device.

The model identifier registration request may include the first model identifier in S901.

S903, the core network device sends a model identifier registration response to the access network device.

The model identifier registration response is used to indicate the registration status of the first model identifier.

Further, in S904, the access network device may send the model identifier response based on the model identifier registration response. Detailed descriptions of S902 and S903 may be referenced with respect to the above related descriptions of S605 and S606, which will not be repeated here.

Furthermore, the method shown in FIG. 9 may also include S905 and S906. It should be noted that if the method shown in FIG. 9 includes S902 and S903, S905 and S906 may be optional.

S905, the terminal device sends first model notification information to the access network device.

S906, the access network device sends second model notification information to the core network device.

From the above, in the above solution, the terminal device generates a model identifier for the first model, then sends the generated model identifier to the access network device for approval, and determines the approved model identifier as the model identifier of the first model. Accordingly, consistence of knowledge of the first model and its model identifier may be ensured between the network devices and the terminal devices in the communication system, which in turn facilitates subsequent model management functions by the network devices and ensures model performance.

Furthermore, the solution shown in FIG. 9 may be applied to application scenarios where model identifiers are allocated for a plurality of models. Specifically, the terminal device may generate a respective model identifier for each model. Correspondingly, the model identifier request may be used to request allocation of the generated model identifiers for respective models. Correspondingly, the model identifier response may be used to indicate the approval status of the generated model identifiers.

It should be noted that detailed descriptions of the differences between the method shown in FIG. 9 and the methods shown in FIG. 2 to FIG. 8 are provided above. More descriptions of the method shown in FIG. 9 may be referenced with respect to the above specific descriptions.

It should be understood that in specific embodiments, the above methods may be implemented in software programs executing on processors integrated into chips or chip modules; alternatively, the methods may be implemented in hardware or in a combination of hardware and software, for example, implemented in dedicated chips or chip modules, or implemented in dedicated chips or chip modules combined with software programs.

Based on the above Embodiment 1 to Embodiment 6, the present application proposes a communication method, as shown in FIG. 10, specifically including S101 and S102.

S101, a terminal device receives model identifier information, the model identifier information used to indicate at least one model identifier.

S102, the terminal device determines a first model identifier of the at least one model identifier as a model identifier of a first model, the first model being deployed on a terminal device.

More contents such as the operation principle, specific process, and positive effects of the method shown in FIG. 10 may be referenced with respect to the above related descriptions of FIG. 1 to FIG. 7, which will not be repeated here.

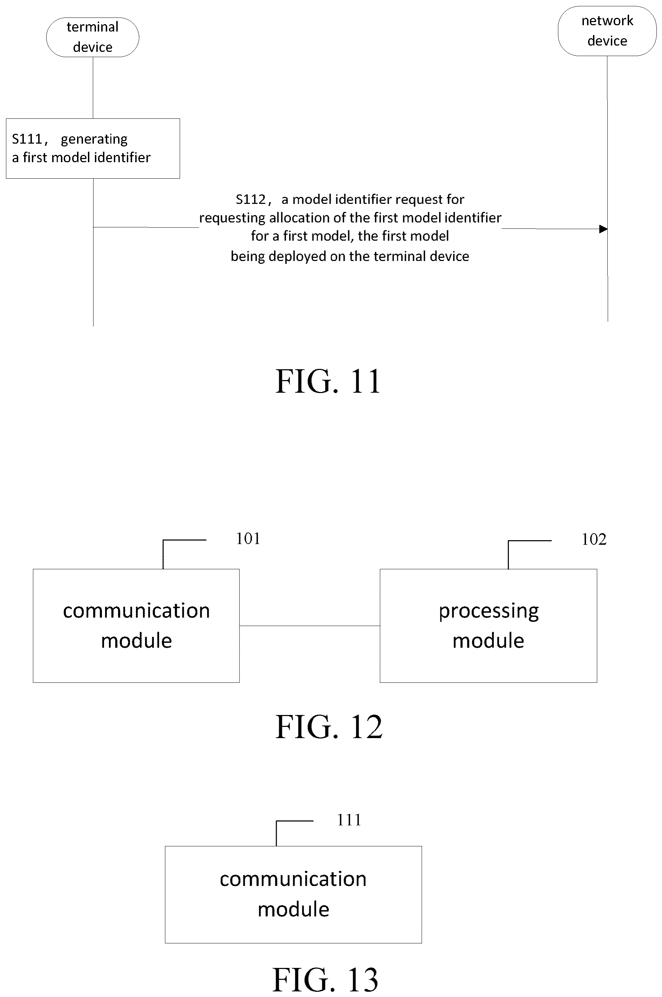

Based on the above Embodiment 7 to Embodiment 8, the present application proposes another communication method, as shown in FIG. 11, specifically including S111 and S112.

S 111, a terminal device generates a first model identifier.

S 112, the terminal device sends a model identifier request, the model identifier request used to request allocation of the first model identifier for a first model, the first model being deployed on a terminal device.

More contents such as the operation principle, specific process, and positive effects of the method shown in FIG. 11 may be referenced with respect to the above related descriptions of FIG. 8 to FIG. 9, which will not be repeated here.

It should be understood that the various embodiments above may be used alone or in combination with each other to achieve different technical effects.

Referring to FIG. 12, FIG. 12 is a schematic structure diagram of a first communication apparatus in an embodiment of the present application. The communication apparatus shown in FIG. 12 may be deployed on the above terminal device. The apparatus shown in FIG. 12 may include a communication module 101 and a processing module 102.

The communication module 101 is used to receive model identifier information, the model identifier information indicating at least one model identifier.

The processing module 102 is used to determine a first model identifier of the at least one model identifier as a model identifier of a first model, the first model being deployed on a terminal device.

In specific embodiments, the communication apparatus shown in FIG. 12 may correspond to chips with communication functionality in a terminal device; or correspond to chips or chip modules with communication functionality included in a terminal device; or correspond to a terminal device.

Referring to FIG. 13, FIG. 13 is a schematic structure diagram of a second communication apparatus in an embodiment of the present application. The communication apparatus shown in FIG. 13 may be deployed on the above terminal device. The apparatus shown in FIG. 13 may include a communication module 111.

The communication module 111 is used to send model identifier information, the model identifier information indicating at least one model identifier, the at least one model identifier for determining a model identifier allocated for a first model, the first model being deployed on a terminal device.

In specific embodiments, the communication apparatus shown in FIG. 13 may correspond to chips with communication functionality in a network device; or correspond to chips or chip modules with communication functionality included in a network device; or correspond to a network device.

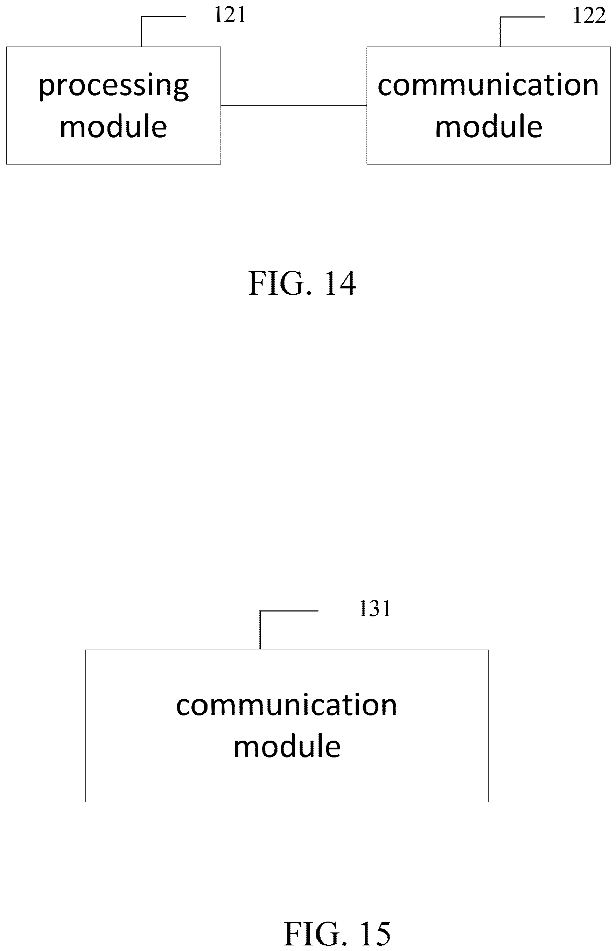

Referring to FIG. 14, FIG. 14 is a schematic structure diagram of a third communication apparatus in an embodiment of the present application. The communication apparatus shown in FIG. 14 may be deployed on the above terminal device. The apparatus shown in FIG. 14 may include a processing module 121 and a communication module 122.

The processing module 121 is used to generate a first model identifier.

The communication module 122 is used to send a model identifier request, the model identifier request for requesting allocation of the first model identifier for a first model, the first model being deployed on a terminal device.

In specific embodiments, the communication apparatus shown in FIG. 14 may correspond to chips with communication functionality in a terminal device; or correspond to chips or chip modules with communication functionality included in a terminal device; or correspond to a terminal device.

Referring to FIG. 15, FIG. 15 is a schematic structure diagram of a fourth communication apparatus in an embodiment of the present application. The communication apparatus shown in FIG. 15 may be deployed on the above terminal device. The apparatus shown in FIG. 15 may include a communication module 131.

The communication module 131 is used to receive a model identifier request, the model identifier request for requesting allocation of a generated first model identifier for a first model, the first model being deployed on a terminal device.

In specific embodiments, the communication apparatus shown in FIG. 15 may correspond to chips with communication functionality in a network device; or correspond to chips or chip modules with communication functionality included in a network device; or correspond to a network device.

More contents such as the operation principles, operation methods, and positive effects of the communication apparatus in the embodiments of the present application may be referenced with respect to the above related descriptions regarding the communication methods, which will not be repeated here.

An embodiment of the present application also provides a computer-readable storage medium having computer programs stored thereon, and the computer programs, when executed by a processor, perform the above communication methods. The storage medium may include ROM, RAM, magnetic disk, or optical disk, etc. The storage medium may also include non-volatile memory or non-transitory memory, etc.

An embodiment of the present application further provides a communication apparatus, including a memory and a processor, the memory having computer programs executable on the processor stored thereon. The processor, when executing the computer programs, performs the steps of the above communication methods. The communication apparatus may be the above network device or may be the above terminal device.

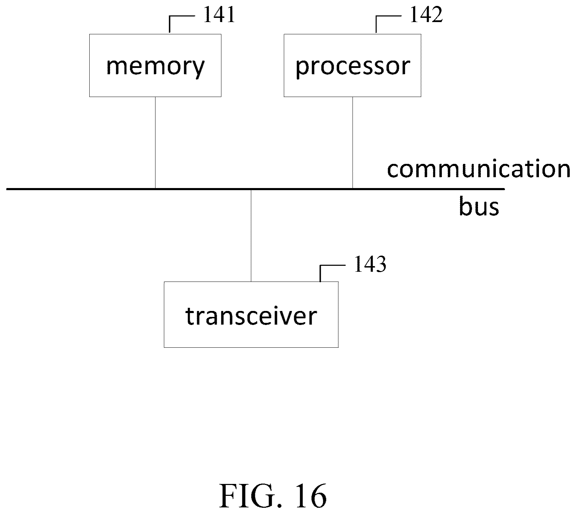

Referring to FIG. 16, FIG. 16 is a schematic hardware structure diagram of a communication apparatus in an embodiment of the present application. The communication apparatus shown in FIG. 16 includes a memory 141, a processor 142, and a transceiver 143. The processor 142 is coupled to the memory 141 and the transceiver 143. The memory 141 may be located internal or external to the communication apparatus. The memory 141, the processor 142, and the transceiver 143 may be connected via a communication bus. The transceiver 143 is used to communicate with other devices. The memory 141 stores computer programs that may be executed on the processor 142. The processor 142, when executing the computer programs, performs the steps in the methods provided by the above embodiments, and/or the transceiver 143, when the processor 142 executing the computer programs, performs the steps in the methods provided by the above embodiments.

It should be understood that in the embodiments of the present application, the processor may be a Central Processing Unit (CPU). The processor may also be another general-purpose processor, a Digital Signal Processors (DSP), an Application Specific Integrated Circuit (ASIC), a Field Programmable Gate Array (FPGA), or another programmable logic device, a discrete gate or a transistor logic device, a discrete hardware component, etc. A general-purpose processor may be a microprocessor, or the processor may also be any conventional processor, etc.

It should also be understood that the memory in the embodiments of the present application may be volatile memory or non-volatile memory, or may include both volatile and non-volatile memory. Non-volatile memory may be Read-Only Memory (ROM), Programmable Read-Only Memory (PROM), Erasable Programmable Read-Only Memory (EPROM), Electrically Erasable Programmable Read-Only Memory (EEPROM), or flash memory. Volatile memory may be Random Access Memory (RAM), which is used as external cache. By way of example but not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), and Direct Rambus Random Access Memory (DR RAM).

The above embodiments may be implemented in whole or in part by software, hardware, firmware, or any other combination thereof. When implemented in software, the above embodiments may be implemented in whole or in part in the form of a computer program product. The computer program product includes one or more computer instructions or computer programs. When the computer instructions or computer programs are loaded or executed on a computer, the processes or functions described in the embodiments of the present application are generated in whole or in part. The computer may be a general-purpose computer, a special-purpose computer, a computer network, or other programmable devices. The computer program may be stored in a computer-readable storage medium or transmitted from one computer-readable storage medium to another computer-readable storage medium. For example, the computer program may be transmitted from a website, computer, server, or data center to another website, computer, server, or data center in a wired or wireless manner.

It should be understood that in the various embodiments of the present application, the sequence numbers of the processes do not imply the order of execution. The order of execution of the processes should be determined by their functions and internal logic, and should not constitute any limitation on the implementation process of the embodiments of the present application.

In the several embodiments provided in the present application, it should be understood that the disclosed methods, apparatuses, and systems may be implemented in other ways. For example, the apparatus embodiments described above are merely illustrative; for example, the division of units is only a logical function division, and other divisions might occur as per actual implementation. For example, multiple units or components may be combined or integrated into another system, or some features may be ignored or not executed. In addition, the coupling or direct coupling or communication connection between each other shown or discussed may be indirect coupling or communication connection through some interfaces, apparatuses, or units, and may be electrical, mechanical, or in other forms.

The units described as separate components may or may not be physically separated, and the components displayed as a unit may or may not be physical units, that is, they may be located in one place, or may be distributed to multiple network units. Some or all of the units may be selected according to actual needs to achieve the purpose of the solutions of the embodiments.

In addition, the functional units in the various embodiments of the present application may be integrated into one processing unit, or each unit may exist alone physically, or two or more units may be integrated into one unit. The above integrated units may be implemented in the form of hardware or in the form of hardware combined with software functional units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of a chip module, or at least some modules/units may be implemented in software programs executing on a processor integrated into the chip module, and the remaining (if any) modules/units may be implemented in hardware such as circuits; for apparatuses or products applied to or integrated into a terminal, each module/unit included may be implemented in hardware such as circuits, and different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

The integrated units implemented in the form of software functional units may be stored in a computer-readable storage medium. The software functional units are stored in a storage medium and include several instructions to cause a computer device (which may be a personal computer, server, or network device, etc.) to perform some of the steps of the methods described in the various embodiments of the present application. The aforementioned storage medium includes various types of media that may store program code, such as U disk, mobile hard disk, Read-Only Memory (ROM), Random Access Memory (RAM), magnetic disk, or optical disk, etc.

It should be understood that the term "and/or" as used herein is merely a description of the relation of related objects, indicating three types of relations. For example, A and/or B may indicate A alone, both A and B, and B alone. In addition, the character "/" in the document indicates an "or" relation between the two objects before and after it.

The term "a plurality of" recited in the embodiments of the present application means two or more.

The descriptions such as first and second recited in the embodiments of the present application are for illustrative purposes and to distinguish the described objects. There is no sequential order for these descriptions, and there is no specific limitation on the number of devices in the embodiments of the present application, and thus no limitation is imposed on the embodiments of the present application.

Although the present application is disclosed as above, the present application is not limited thereto. Any person skilled in the art may make various alterations and modifications without departing from the spirit and scope of the present application. Therefore, the protection scope of the present application shall be subject to the scope defined by the claims.

## Claims

1. A communication method, comprising:
receiving model identifier information, the model identifier information for indicating at least one model identifier; and
determining a first model identifier of the at least one model identifier as a model identifier of a first model, the first model being deployed on a terminal device.

2. The method according to claim 1, further comprising:
sending a model identifier request, the model identifier request for requesting allocation of a model identifier for the first model.

3. The method according to claim 2, wherein sending the model identifier request comprises:
sending the model identifier request before deployment of the first model is completed.

4. The method according to claim 1, further comprising:
sending model identifier allocation related information, the model identifier allocation related information for assisting in allocation of a model identifier for the first model.

5. The method according to claim 4, wherein the model identifier allocation related information comprises at least one of:
a released model identifier, information on training data of a model, model structure information, model function information, model input information, model output information, and model priority information.

6. The method according to any one of claims 1 to 5, wherein the first model identifier is a model identifier with the smallest identifier value of the at least one model identifier.

7. The method according to any one of claims 1 to 5, further comprising:
sending a model identifier selection result, the model identifier selection result for indicating the selected first model identifier.

8. The method according to claim 7, wherein sending the model identifier selection result comprises:
sending the model identifier selection result before deployment of the first model is completed.

9. The method according to claim 7, further comprising:
receiving a model identifier selection response, the model identifier selection response for indicating approval status of the model identifier selection result.

10. The method according to claim 9, wherein when the model identifier selection response indicates disapproval of the model identifier selection result:
the model identifier selection response further indicates a second model identifier, or
the model identifier selection response further indicates to generate a model identifier for the first model, or
the model identifier selection response further indicates to reselect a model identifier for the first model and/or indicates a model identifier reselection list.

11. The method according to any one of claims 1 to 5, further comprising:
sending model notification information, the model notification information for describing the first model.

12. The method according to claim 11, wherein the model notification information comprises at least one of the following information of the first model:
the model identifier, model function information, model size information, model complexity information, model application scenario information, model structure information, model configuration information, model input information, model output information, and model priority information.

13. A communication method, comprising:
sending model identifier information, the model identifier information for indicating at least one model identifier, the at least one model identifier for determining a model identifier allocated for a first model, the first model being deployed on a terminal device.

14. The method according to claim 13, further comprising:
receiving a model identifier request, the model identifier request for requesting allocation of a model identifier for the first model.

15. The method according to claim 13, further comprising:
receiving model identifier allocation related information, the model identifier allocation related information for assisting in allocation of a model identifier for the first model.

16. The method according to claim 15, wherein the model identifier allocation related information comprises at least one of:
a released model identifier, information on training data of a model, model structure information, model function information, model input information, model output information, and model priority information.

17. The method according to any one of claims 13 to 16, further comprising:
receiving a model identifier selection result, the model identifier selection result for indicating a first model identifier selected by the terminal device.

18. The method according to claim 17, further comprising:
sending a model identifier selection response, the model identifier selection response for indicating approval status of the model identifier selection result.

19. The method according to claim 18, wherein when the model identifier selection response indicates disapproval of the model identifier selection result,:
the model identifier selection response further indicates a second model identifier; or
the model identifier selection response further indicates to generate a model identifier for the first model; or
the model identifier selection response further indicates to reselect a model identifier for the first model and/or indicates a model identifier reselection list.

20. The method according to any one of claims 13 to 16, further comprising:
receiving first model notification information, the first model notification information for describing the first model.

21. The method according to claim 20, wherein the first model notification information comprises at least one of the following information of the first model:
the model identifier, model function information, model size information, model complexity information, model application scenario information, model structure information, model configuration information, model input information, model output information, and model priority information.

22. The method according to claim 20, further comprising:
sending second model notification information, the second model notification information for describing the first model.

23. The method according to claim 13 or claim 17, further comprising:
sending a model identifier registration request, the model identifier registration request for requesting registration of the model identifier of the first model.

24. The method according to claim 23, further comprising:
receiving a model identifier registration response, the model identifier registration response for indicating registration status of the model identifier allocated for the first model.

25. A communication method, comprising:
generating a first model identifier; and
sending a model identifier request, the model identifier request for requesting allocation of the first model identifier for a first model, the first model being deployed on a terminal device.

26. The method according to claim 25, further comprising:
receiving a model identifier response, the model identifier response for indicating approval status of the allocation of the first model identifier for the first model.

27. The method according to claim 26, wherein when the model identifier response indicates disapproval of the allocation of the first model identifier for the first model,:
the model identifier response further indicates to re-generate a model identifier; or
the model identifier response further indicates a second model identifier; or
the model identifier response further indicates to select a model identifier for the first model and/or indicates a model identifier selection list.

28. A communication method, comprising:
receiving a model identifier request, the model identifier request for requesting allocation of a generated first model identifier for a first model, the first model being deployed on a terminal device.

29. The method according to claim 28, further comprising:
sending a model identifier response, the model identifier response for indicating approval status of the allocation of the first model identifier for the first model.

30. The method according to claim 29, wherein when the model identifier response indicates disapproval of the allocation of the first model identifier for the first model,:
the model identifier response further indicates to re-generate a model identifier; or
the model identifier response further indicates a second model identifier; or
the model identifier response further indicates to select a model identifier for the first model and/or indicates a model identifier selection list.

31. A communication apparatus, comprising:
a communication module for receiving model identifier information, the model identifier information for indicating at least one model identifier; and
a processing module for determining a first model identifier of the at least one model identifier as a model identifier of a first model, the first model being deployed on a terminal device.

32. A communication apparatus, comprising:
a communication module for sending model identifier information, the model identifier information for indicating at least one model identifier, the at least one model identifier for determining a model identifier allocated for a first model, the first model being deployed on a terminal device.

33. A communication apparatus, comprising:
a processing module for generating a first model identifier; and
a communication module for sending a model identifier request, the model identifier request for requesting allocation of the first model identifier for a first model, the first model being deployed on a terminal device.

34. A communication apparatus, comprising:
a communication module for receiving a model identifier request, the model identifier request for requesting allocation of a generated first model identifier for a first model, the first model being deployed on a terminal device.

35. A computer-readable storage medium having computer programs stored thereon, wherein the computer programs, when executed by a processor, perform the communication method according to any one of claims 1 to 12, or the communication method according to any one of claims 13 to 24, or the communication method according to any one of claims 25 to 27, or the communication method according to any one of claims 28 to 30.

36. A communication apparatus, comprising a memory and a processor, the memory having computer programs executable on the processor stored thereon, wherein the processor, when executing the computer programs, performs the steps of the communication method according to any one of claims 1 to 12, or the steps of the communication method according to any one of claims 25 to 27.

37. A communication apparatus, comprising a memory and a processor, the memory having computer programs executable on the processor stored thereon, wherein the processor, when executing the computer programs, performs the steps of the communication method according to any one of claims 13 to 24, or the steps of the communication method according to any one of claims 28 to 30.
